# EUROPÄISCHE PATENTSCHRIFT

(11) **EP 0 508 189 B1**
(45) Veröffentlichungstag und Bekanntmachung des Hinweises auf die Patenterteilung: **10.05.1995**
(21) Anmeldenummer: 92104933.4
(22) Anmeldetag: 21.03.1992
(51) Int. Cl.: A01D 45/02

(54) **Maschine zum Mähen und Häckseln von Mais und dgl. stengelartigem Erntegut**
Machine for mowing and chopping maize and such stalk crops
Machine pour faucher et hacher le mais et les plantes à tige similaires

(30) Priorität: 12.04.1991 DE 4111981
(43) Veröffentlichungstag der Anmeldung: 14.10.1992
(73) Patentinhaber: Maschinenfabrik Kemper GmbH, D-48694 Stadtlohn (DE)
(72) Erfinder: Bertling, Alfred, Dipl.-Ing., W-4424 Stadlohn (DE)
(74) Vertreter: Busse & Busse Patentanwälte

(56) Entgegenhaltungen:
- EP-A- 0 099 527
- EP-A- 0 286 882
- EP-A- 0 286 882
- AT-B- 380 146
- FR-A- 2 559 995

## Beschreibung

Die Erfindung betrifft eine Maschine zum Mähen und Häckseln von Mais und dgl. stengelartigem Erntegut nach dem Oberbegriff des Patentanspruchs 1. Solche Maschinen werden häufig auch kurz als Mais-Mähhäcksler bezeichnet.

Bei einer bekannten derartigen Maschine (EP-PS 0 099 527), die die Stengel des Ernteguts in aufrechter Stellung einzieht und mäht und anschließend dem Häckselgebläse mit den vorgeschalteten Einschubwalzen zuführt, ist durch die Mehrzahl der über den vorderen Arbeitsbereich der Maschine verteilt ausgebildeten Einzugs- und Schnittstellen eine von Reihenabstand und Reihenrichtung des Ernteguts unabhängige Arbeitsweise erreicht, so daß die Maschine auch bei Breitsaat, vergleichbar einem Mähdrescher im Getreide, einsetzbar ist. Darüber hinaus kann mit Hilfe der an den Einzugs- und Mähvorrichtungen vorgesehenen Mitnehmerzähne auch geknicktes Erntegut, z.B. Lagermais, einwandfrei von der bekannten Maschine aufgenommen werden.

Im Betrieb der bekannten Maschine hat sich jedoch gezeigt, daß sich in Abhängigkeit vom Erntegut Schwierigkeiten beim Transport des geschnittenen Ernteguts von den äußeren Einzugs- und Mähvorrichtungen über die als Überführungsorgan wirkenden inneren Einzugs- und Mähvorrichtungen zu den Einschubwalzen des Häckselgebläses zur gebündelten Einspeisung des Ernteguts in deren Einführungsspalt auftreten können, die in erster Linie darauf zurückzuführen sind, daß die Arbeitsebene der Einzugs- und Mähvorrichtungen und die den Einführungsspalt der Einschubwalzen des Häckselgebläses enthaltende Ebene in verschiedenen, mit einem senkrechten Abstand voneinander verlaufenden Horizontalebenen angeordnet sind.

Der Erfindung liegt daher die Aufgabe zugrunde, eine Maschine zum Mähen und Häckseln von Mais und dgl. stengelartigem Erntegut zu schaffen, bei der jedes stengelartige Erntegut sicher und schnell in den Einführungsspalt der Einschubwalzen des Häckselgebläses in gebündelter bzw. zusammengefaßter Form eingespeist werden kann.

Ausgehend von einer Maschine der eingangs angegebenen Art wird diese Aufgabe nach der Erfindung durch die im kennzeichenden Teil des Patentanspruchs 1 angegebenen Merkmale gelöst. Weitere Merkmale und vorteilhafte Einzelheiten der Erfindung ergeben sich aus den Unteransprüchen.

Durch die bei der erfindungsgemäßen Ausgestaltung der Maschine vorgesehenen Schrägfördertrommeln wird auf einfache Weise der Höhenunterschied zwischen der Arbeitsebene der Einzugs- und Mähvorrichtungen und der vom Einführungsspalt der Einschubwalzen eingenommenen horizontalen Ebene überbrückt, ohne daß dadurch die Arbeitsposition der Einzugs- und Mähvorrichtungen nachteilig beeinflußt wird, diese vielmehr in einer im wesentlichen horizontalen Ebene mit der gewünschten Mehrzahl von über den vorderen Arbeitsbereich verteilten Einzugs- und Schnittstellen arbeiten können. Dabei wird das geschnittene Erntegut von den Schrägfördertrommeln, die einen kleineren Durchmesser als die ihrerseits trommelförmigen Einzugs- und Mähvorrichtungen aufweisen können, sicher erfaßt und dem Einführungsspalt der Einschubwalzen zügig zugeführt, um sodann unmittelbar vom Häckslergebläse zerkleinert zu werden. Dies ermöglicht ein genaues Arbeiten mit einer hohen Arbeitsgeschwindigkeit bei vergleichsweise kurzen Förderwegen für das geschnittene Erntegut.

Die erfindungsgemäße Maschine kann dabei grundsätzlich mit nur zwei beidseits der vertikalen Längsmittelebene der Maschine angeordneten Einzugs- und Mähvorrichtungen zum Mähen des Erntegutes, insbesondere Mais, ausgerüstet sein, oder es sind zur Erzielung einer größeren Arbeitsbreite von etwa 4,50 m vier paarweise beidseits der vertikalen Längsmittelebene der Maschine angeordnete Einzugs- und Mähvorrichtungen vorgesehen, wobei die inneren, an die vertikale Längsmittelebene der Maschine angrenzenden Einzugs- und Mähvorrichtungen in an sich bekannter Weise zugleich auch jeweils ein Überführungsorgan für das von den äußeren Einzugs- und Mähvorrichtungen zugeführte geschnittene Erntegut bilden.

Eine besonders bevorzugte Ausgestaltung einer erfindungsgemäßen Maschine für eine Arbeitsbreite von etwa 4,50 m ist im Anspruch 11 gekennzeichnet. Diese Ausgestaltung zeichnet sich durch eine besonders kompakte Anordnung der Einzugs- und Mähvorrichtungen sowie der Schrägfördertrommeln in Achsrichtung der Maschine aus, womit kurze, gerade Förderwege des geschnittenen Erntegutes von den äußeren zu den inneren Einzugs- und Mähvorrichtungen und von diesen über die Schrägfördertrommeln zu den Einschubwalzen des Häckselgebläses verbunden sind. Der Schwerpunkt der Arbeitswerkzeuge liegt bei dieser Konstruktion näher an der Vorderachse des Fahrzeugs, womit die Maschine bei besserer Übersicht für den Fahrer fahrtechnisch und ergonomisch günstiger zu handhaben ist.

In der nachstehenden Beschreibung ist die Erfindung anhand einer Zeichnung näher erläutert, in der mehrere Ausführungsbeispiele des Gegenstands der Erfindung schematisch dargestellt sind; in der Zeichnung zeigen:
- Fig. 1: eine perspektivische Ansicht der erfindungsgemäßen Maschine nach einem ersten Ausführungsbeispiel, wobei die Darstellung im wesentlichen auf den vier Einzugs- und Mähvorrichtungen umfassenden Arbeitsteil der Maschine beschränkt ist,
- Fig. 2: eine Ansicht der Maschine nach der Linie II-II der Fig. 1,
- Fig. 3: einen schnitt durch die vertikale Längsmittelebene der Maschine gemäß der Linie III-III der Fig. 1,
- Fig. 4: eine Teildraufsicht auf die Maschine gemäß dem Pfeil IV der Fig. 3,
- Fig. 5: eine Draufsicht auf eine weitere Ausführungsform des Arbeitsteils der Maschine mit vier Einzugs- und Mähvorrichtungen,
- Fig. 6: eine Draufsicht auf ein weiteres Ausführungsbeispiel der erfindungsgemäßen Maschine, bei der der Arbeitsteil nur zwei Einzugs- und Mähvorrichtungen umfaßt, und
- Fig. 7: eine Darstellung entsprechend Fig. 6 zur Veranschaulichung einer Abwandlung.

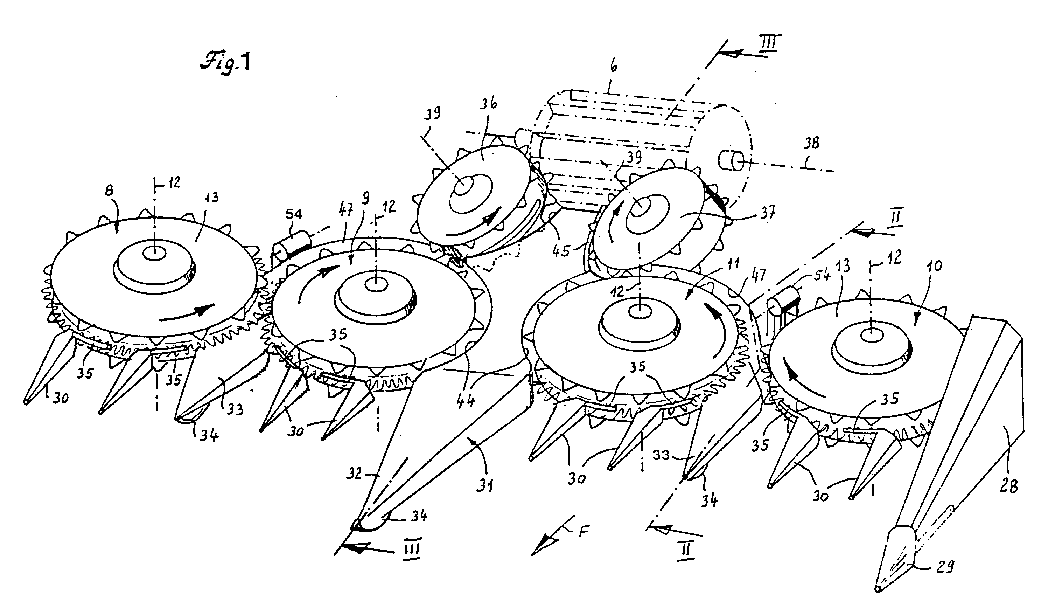

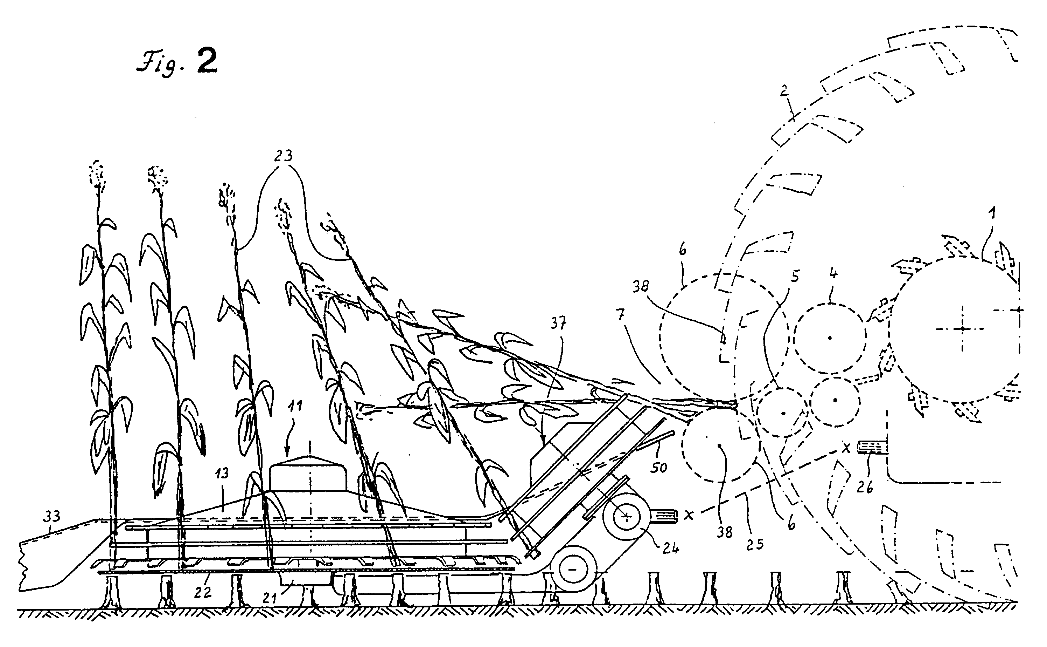

Die gemäß Fig. 1 in Arbeits- bzw. Fahrtrichtung - Pfeil F - vorbewegte Maschine weist ein quer zur Fahrtrichtung F angeordnetes Häckselgebläse 1 auf, das in Fig. 2 strichpunktiert, ebenso wie ein Schlepperrad 2 eines landwirtschaftlichen Schleppers oder dgl., dargestellt ist. Die Maschine kann, wie bei dem dargestellten Ausführungsbeispiel, als Anbaugerät für einen Schlepper oder aber auch als Selbstfahrer ausgebildet sein, wobei je nach den räumlichen Verhältnissen dem Häckselgebläse 1 mehrere Einschubwalzen 4, 5 und 6 für das geschnittene Erntegut vorgeordnet sind. Die Einschubwalzen 4 bilden ein unmittelbar an das Häckselgebläse 1 angrenzendes Einschubwalzenpaar, während die Einschubwalzen 6 ein vorderes Einschubwalzenpaar bilden, das einen Einführungsspalt 7 für das geschnittene Erntegut definiert. Die Einschubwalze 5 bildet eine untere Zwischenwalze zwischen den Einschubwalzenpaaren 4 und 6. Durch den Einführungsspalt 7 gelangt das zugeführte Erntegut in das nicht näher dargestellte Gehäuse des Häckselgebläses 1, wo es zerkleinert und ggf. über einen tangentialen Auswurfkanal nach oben ausgeblasen wird.

Zur Beschickung des Häckselgebläses 1 mit Erntegut, z.B. Mais, sind diesem in Fahrtrichtung F vier Einzugs- und Mähvorrichtungen 8, 9, 10 und 11 mit von mehreren über den vorderen Arbeitsbereich verteilten Schnittstellen gebildeten, nebeneinanderliegenden Einzel-Arbeitsbreiten vorgeordnet. Die inneren, an die durch die Schnittlinie III-III in Fig. 1 gekennzeichnete vertikale Längsmittelebene der Maschine angrenzenden Einzugs- und Mähvorrichtungen 9 und 11 bilden jeweils zugleich auch ein Überführungsorgan für von den äußeren Einzugs- und Mähvorrichtungen 8, 10 zugeführtes geschnittenes Erntegut.

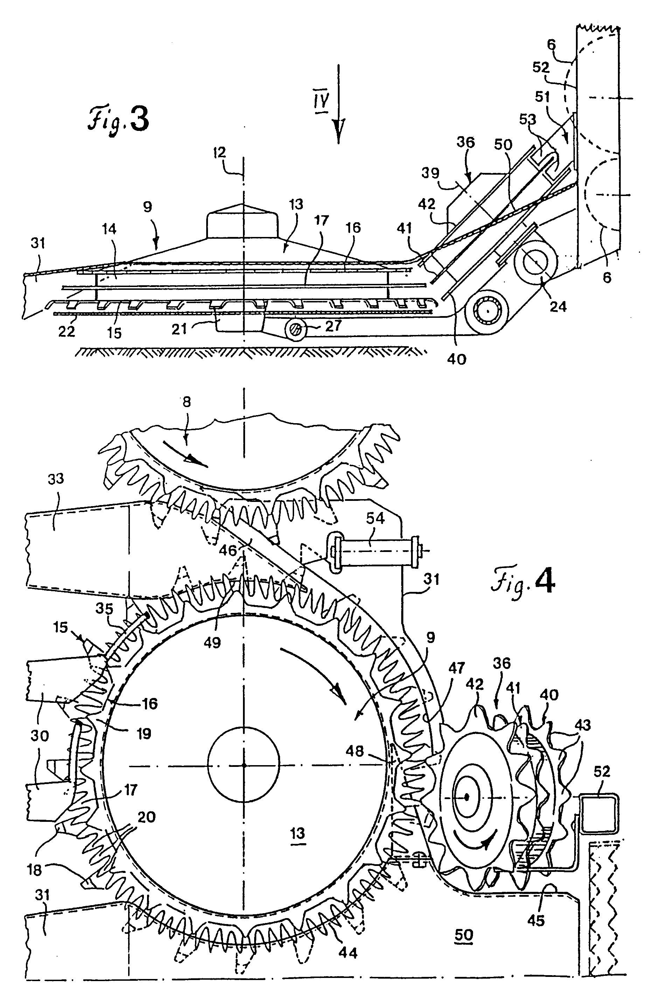

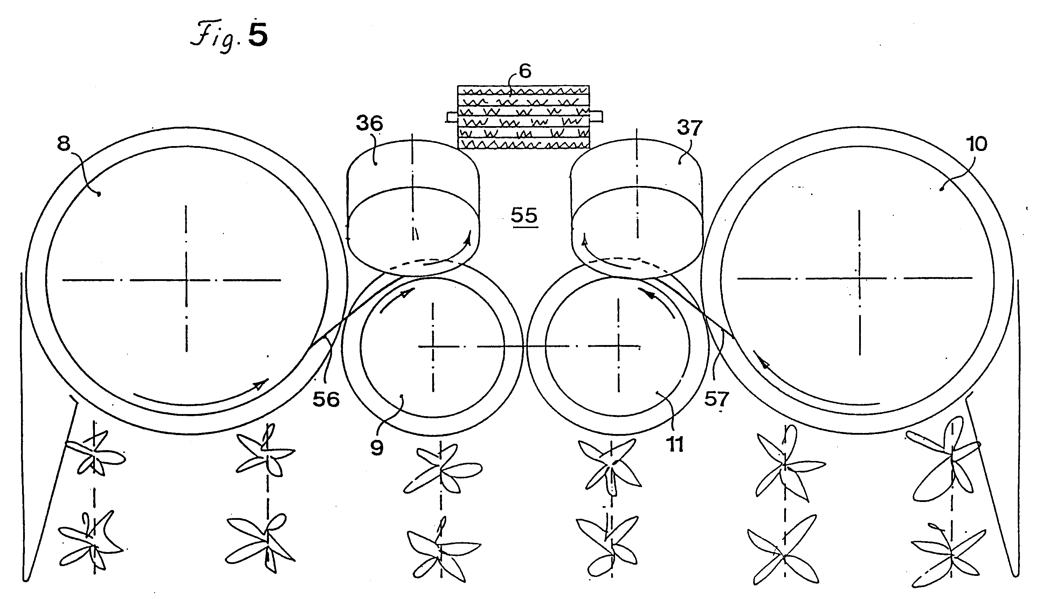

Jede der Einzugs- und Mähvorrichtungen 8 bis 11 besteht aus einem um eine vertikale oder zumindest im wesentlichen vertikale Achse 12 umlaufenden Rotationskörper 13 in Form eines geschlossenen Hohlkörpers mit einem zylindrischen Mantel 14. An seinem Außenumfang ist der zylindrische Mantel 14 mit einem Mitnehmerzahnkranz 15 an seinem unteren Ende und einem Mitnehmerzahnkranz 16 an seinem oberen Ende sowie im Bereich zwischen diesen mit einem mittleren Mitnehmerzahnkranz 17 versehen. Die einzelnen Zähne 18, 19, 20 der Mitnehmerzahnkränze 15 bis 17 können eine beliebige geeignete, sich ggf. nach der Art des Erntegutes richtende Form und Anordnung aufweisen und besitzen beispielsweise die insbesondere aus den Fig. 3 und 4 ersichtliche Ausgestaltung, bei der die Zähne 18 des unteren Mitnehmerzahnkranzes 15 nach unten abgebogene Endteile besitzen, während die Zähne 19 und 20 der Mitnehmerzahnkränze 16 und 17 jeweils durchgehend in einer radialen Ebene des Rotationskörpers 13 verlaufen und beispielsweise die Form der kurzen, weit beabstandeten Dreiecke der Zähne 19 des oberen Zahnkranzes 16 oder die Form der schlanken, eng beabstandeten Dreiecke der Zähne 20 des mittleren Zahnkranzes 17 aufweisen.

Unterhalb des unteren Mitnehmerzahnkranzes 18 besitzt der Rotationskörper 13 ein zentrales Lagerteil 21 für seine die Drehachse 12 definierende Rotorwelle. Ein an seinem Außenumfang fein verzahntes Mähmesser 22 ist für seinen Umlauf um die vertikale Drehachse 12 des Rotationskörpers 13 an diesem in nicht näher dargestellter Weise abgestützt. Dabei laufen die Mähmesser 22 im Betrieb der Maschine mit wesentlich höherer Umfangsgeschwindigkeit als die Rotationskörper 13 um, so daß die Gutstengel 23 (Fig. 2) nach Art eines Rotormähers im freien Schnitt von den Mähmessern 22 kurz oberhalb des Bodens abgetrennt werden. Der Antrieb für die Rotationskörper 13 und die Mähmesser 22 mit unterschiedlichen Drehzahlen wird im übrigen in nicht näher dargestellter Weise über ein Winkelgetriebe 24 und über eine Gelenkwelle 25 oder dgl. von einer hochgesetzten Welle 26 des Häckselgebläses 1 abgenommen und auf die einzelnen Aggregate übertragen. Eine Verbindungswelle 27 für sämtliche Rotationskörper 13 der Einzugs- und Mähvorrichtungen 8 bis 11 ist bei 27 dargestellt. Die Mähmesser 22 untergreifen den Zylindermantel 14 des Rotationskörpers 13 und stehen über diesen nach außen hin vor, wobei sie jedoch außen von dem mit geringem Abstand oberhalb des Mähmessers 22 angeordneten, in einer parallelen Horizontalebene umlaufenden unteren Mitnehmerzahnkranz 15 ihrerseits übergriffen sind.

Grundsätzlich ist auch eine Ausgestaltung der Einzugs- und Mähvorrichtungen 8 bis 11 in der Weise möglich, daß ihre Mäh- bzw. Schneidmesser mit maschinenfesten Gegenmessern zusammenarbeiten, in welchem Fall die Mähmesser die gleiche Umlaufgeschwindigkeit wie die Rotationskörper 13 aufweisen können, so daß die Mitnehmerzahnkränze 15 bis 17 und das Mähmesser mit der gleichen Geschwindigkeit angetrieben werden können.

Die Einzugs- und Mähvorrichtungen 8 bis 11 sind von einem an der Vorderseite, in Fahrtrichtung F, offenen Maschinenrahmen seitlich und rückseitig umgeben, der in der Zeichnung nur teilweise dargestellt ist. So ist aus Fig. 1 eine seitliche Führung 28 ersichtlich, die mit einer entsprechenden Führung auf der gegenüberliegenden Seite des Maschinenrahmens die Arbeitsbreite der Maschine bestimmt. Die seitlichen Führungen 28 laufen vorn in einer Teilerspitze 29 aus, die als Blattheber für das Erntegut wirkt und den Mähschnitt vorbereitet. Innerhalb der Arbeitsbreite der Maschine sind jeder Einzugs- und Mähvorrichtung 8 bis 11 weitere Teilerspitzen 30 zugeordnet, die unterseitig in nicht näher dargestellter Weise an der Maschine festgelegt sind. Eine Führungsbank 31 für das geschnittene Erntegut bildet eine mittlere Teilerspitze 32 in der vertikalen Längsmittelebene der Maschine und zwei seitliche Teilerspitzen 33 jeweils im Zwischenbereich zwischen den Einzugs- und Mähvorrichtungen 8 und 9 bzw. 10 und 11 aus. An ihren freien vorderen Enden sind die Teilerspitzen 32 und 33 unterseitig mit Gleitkufen 34 zur vorderseitigen Abstützung der im übrigen am Maschinenrahmen gehaltenen Führungsbank 31 versehen.

Zwischen den jeweils benachbarten Teilerspitzen ist jeweils eine Einzugs- und Schnittstelle für die Gutstengel 23 ausgebildet. Am oberen Rand der Teilerspitzen 30 sind im Bereich des Außenumfangs der Rotationskörper 13 der Einzugs- und Mähvorrichtungen 8 bis 11 Führungsfinger 35 vorgesehen, die sich von einer Seite der Teilerspitzen 30 forterstrecken und dem Umfang des jeweiligen Rotationskörpers 13 in der durch Bewegungspfeile versinnbildlichten Drehrichtung der jeweiligen Einzugs- und Mähvorrichtung 8 bis 11 folgen. Diese Führungsfinger 35 sorgen dafür, daß geschnittene Gutstengel 23 jeweils in den Zahngrund der Mitnehmerzahnkränze 15, 16 und 17 der Rotationskörper 13 eingedrückt, dort gehalten und von diesen mitgenommen werden, so daß sie nachfolgende Einzugs- und Schnittstellen getrennt von hinzukommenden Gutstengeln passieren.

Im Bereich zwischen den beiden inneren Einzugs- und Mähvorrichtungen 9, 11 und den an diese angrenzenden Einschubwalzen 6 des Häckselgebläses 1 ist jeweils eine Schrägfördertrommel 36, 37 an einem Traggestell abgestützt, die den vertikalen Abstand zwischen der im wesentlichen horizontalen Arbeitsebene der Einzugs- und Mähvorrichtungen 8 bis 11 und der ihrerseits im wesentlichen horizontalen Ebene, in der der Einführungsspalt 7 der Einschubwalzen 6 liegt, überbrücken. Die Schrägfördertrommeln 36, 37 besitzen eine spiegelsymmetrische Anordnung beidseits der vertikalen Längsmittelebene der Maschine und sind, unter entsprechender Bemessung ihres Durchmessers, umfangsseitig einerseits an den Umfang der Einzugs- und Mähvorrichtungen 9,11 und andererseits an den Umfang der um horizontale Achsen 38 umlaufenden Einschubwalzen 6 angrenzend angeordnet, um das geschnittene Erntegut von den inneren Einzugs- und Mähvorrichtungen 9, 11 zu übernehmen und in den Einführungsspalt 7 der Einschubwalzen 6 einzuspeisen.

Die Schrägfördertrommeln 36, 37 werden in nicht näher dargestellter Weise über das Winkelgetriebe 24 mit einer der Umfangsgeschwindigkeit der Rotationskörper 13 entsprechenden Umfangsgeschwindigkeit in Richtung der eingezeichneten Bewegungspfeile angetrieben. Ihre Drehachsen 39 sind dabei in einer zur vertikalen Langsmittelebene der Maschine parallelen Vertikalebene zur Arbeitsebene der Einzugs- und Mähvorrichtungen 8 bis 11 in einem spitzen Winkel von vorzugsweise etwa 20° geneigt.

Die Schrägfördertrommeln 36, 37 sind wie die Rotationskörper 13 der Einzugs- und Mähvorrichtungen 8 bis 11 von allseits geschlosenen Hohlkörpern gebildet und am Außenumfang des zylindrischen Trommelmantels mit Mitnehmerzahnkränzen 40, 41 und 42 versehen. Die Mitnehmerzahnkränze 40 und 42 sind in der unteren bzw. oberen Randebene des Trommelmantels angeordnet, während sich der Mitnehmerzahnkranz 41 mittig zwischen den Mitnehmerzahnkränzen 40 und 42 am Trommelmantel befindet. Die Zähne 43 der Mitnehmerzahnkränze 40 bis 42 besitzen eine geeignete Wellen- oder Zackenform, wie sie für die Handhabung des geschnittenen Ernteguts zweckmäßig ist.

Die Kopfkreisdurchmeser der Mitnehmerzahnkränze 40 bis 42 sind hierbei so bemessen, daß sie im Bereich der größten Annäherung der Schrägfördertrommel 36, 37 an den Rotationskörper 13 der inneren Einzugs- und Mähvorrichtung 9 bzw. 11 in engem Abstand mit den entsprechenden Mitnehmerzahnkränzen 15 bis 17 der Einzugs- und Mähvorrichtungen 9, 11 zusammenarbeiten oder ineinandergreifen. Für einen sicheren Weitertransport kann es sich empfehlen, einen weiteren Mitnehmerzahnkranz mit einem dem des Zahnkranzes 15 entsprechenden Durchmesser oberhalb des Zahnkranzes 16 an den Mähvorrichtungen 9, 11 vorzusehen. Dabei kann es sich als zweckmäßig erweisen, die Kopfkreisdurchmesser vom unteren Mitnehmerzahnkranz 15 der inneren Einzugs- und Mähvorrichtungen 9, 11 und/oder der Schrägfördertrommeln 36, 37 zum jeweils oberen Mitnehmerkranz 16 bzw. 42 entsprechend dem Neigungswinkel der Schrägfördertrommeln 36, 37 zu verkleinern. Bei dem dargestellten Ausführungsbeispiel ist diese Maßnahme sowohl bei den inneren Einzugs- und Mähvorrichtungen 9, 11 als auch bei den Schrägfördertrommeln 36, 37 getroffen, so daß die Rotationskörper 13 und die Schrägfördertrommeln 36, 37 im Bereich ihres Zylindermantels im Querschnitt eine sich nach oben verjüngende trapezförmige Hüllkontur ihrer Mitnehmerzahnkränze aufweisen.

Die den Einzugs- und Mähvorrichtungen 8 bis 11 und den Schrägfördertrommeln 36, 37 in spiegelsymmetrischer Ausbildung beidseits der vertikalen Längsmittelebene der Maschine zugeordnete Führungsbank 31 hat seitliche Aussparungen 44 und Umfangsführungen 45 für die Schrägfördertrommeln 36, 37. Ferner sind tangentiale Führungen 46 in rückseitiger Verlängerung der Teilerspitzen 33 für die Überführung des von den äußeren Einzugs- und Mähvorrichtungen 8, 10 geschnittenen Ernteguts gebildet. Eine anschließende Umfangsführung 47 umgreift den Rotationskörper 13 der inneren Einzugs- und Mähvorrichtung 9, 11 bis nahe an die Schrägfördertrommel 36, 37. Ein vom mittleren Bereich der Führungsbank 31 ausgehender Abstreifer 48 lenkt das geschnittene Erntegut in die der Schrägfördertrommel 36, 37 zugeordnete Führung 45. Vervollständigt wird die Umfangsführung der als Übertragungsorgan wirkenden inneren Einzugs- und Mähvorrichtungen 9, 11 durch einen Umfangsführungsabschnitt 49 in rückseitiger Verlängerung der Teilerspitze 33, so daß nur der in Fahrtrichtung F vorauslaufende, die Einzugs- und Schnittstellen ausbildende Bereich der Einzugs- und Mähvorrichtungen 9, 11 von Umfangsführungen freigehalten ist.

Die Führungsbank 31 ist im übrigen mit einem zwischen die Schrägfördertrommeln 36, 37 greifenden zentralen Endteil 50 versehen, der, wie dies insbesondere aus den Figuren 2 und 3 ersichtlich ist, nach oben in der Weise hochgeführt ist, daß er oberflächig an den Einführungsspalt 7 der Einschubwalzen 6 angrenzt. Oberhalb des Endteils 50 ist nahe den stirnseitigen Endbereichen der Einschubwalzen 6 je ein seitlicher Abstreifer 51 an einem Haltepfosten 52 des Maschinenrahmens befestigt, der in seinem freien Endbereich mit den Mitnehmerzahnkränzen 40 bis 42 der Schrägfördertrommel 36, 37 zusammenwirkt. Der jeweilige Abstreifer 51 besitzt hierzu die aus Fig. 3 ersichtliche Ausbildung mit einem mittleren Durchgangsschlitz für den mittleren Mitnehmerzahnkranz 41 der Schrägfördertrommel 36, 37, wobei endseitige Eingriffsteile 53 zwischen die Mitnehmerzahnkränze 40, 41 bzw. 41, 42 greifen, um das herantransportierte Erntegut abzustreifen.

Im Betrieb der Maschine wird das geschnittene Erntegut von den Mitnehmerzahnkränzen 15 bis 17 der Einzugs- und Mähvorrichtungen 8 bis 11 im Verein mit den vorgesehenen Führungen erfaßt. Bei entsprechend gegenläufig angetriebenen Rotoren 13 wird das Schnittgut von den äußeren Einzugs- und Mähvorrichtungen 8 und 10 an die inneren Einzugs- und Mähvorrichtungen 9 und 11 übergeben, die insoweit als Überführungsorgan dienen. Von den inneren Einzugs- und Mähvorrichtungen 9, 11 gelangt das von sämtlichen, in einer gemeinsamen vertikalen Querebene der Maschine angeordneten Einzugs- und Mähvorrichtungen 8 bis 11 geschnittene Erntegut zu den Schrägfördertrommeln 36, 37, die es ihrerseits übernehmen und bei ihrer angegegeben Drehrichtung den Einschubwalzen 6 zufördern, wobei es mit Hilfe der Abstreifer 51 aus dem Mitnehmerzahneingriff mit den Schrägförderrollen 36, 37 gelöst wird, um sodann unmittelbar in den Einführungsspalt 7 der Einschubwalzen 6 zu gelangen. Dies ist insbesondere auch aus Fig. 2 ersichtlich, die außerdem erkennen läßt, daß von den Einzugs- und Mähvorrichtungen 8 bis 11 insgesamt ein gleichmäßiges, im wesentlichen horizontales Stoppelfeld erzeugt wird. Die Arbeitsbreite der Maschine kann dabei etwa 4,5 m oder mehr betragen.

Zum Verfahren der Maschine zwischen verschiedenen Einsatzorten auf öffentlichen Straßen und Wegen kann die von der Arbeitsbreite bestimmte größte Breite der Maschine dadurch verringert werden, daß die beiden äußeren Einzugs- und Mähvorrichtungen 8, 10 jeweils über ein Scharnier 54 aus der gezeigten horizontalen Arbeitsstellung in eine um 90° nach innen hochgeklappte senkrechte Transportstellung schwenkbar am Maschinenrahmen abgestützt sind. Dabei können auch die Antriebsverbindungen zwischen den benachbarten Einzugs- und Mähvorrichtungen 8, 9 bzw. 10, 11 in nicht näher dargestellter Weise für den Transportvorgang abgekuppelt werden.

Bei der abgewandelten Ausführungsform gemäß Fig. 5 sind die vier Einzugs- und Mähvorrichtungen 8, 9, 10 und 11 zwar wie im Falle der Ausführungsform gemäß Fig. 1 mit ihren in Fahrtrichtung vorauslaufenden Umfangspunkten in einer gemeinsamen vertikalen Querebene der Maschine angeordnet, jedoch besitzen bei dem vorliegenden Ausführungsbeispiel die Einzugs- und Mähvorrichtungen 8 bis 11 nicht sämtlich den gleichen Durchmesser, sondern die inneren Einzugs- und Mähvorrichtungen 9 und 11 weisen einen gegenüber dem der äußeren Einzugs- und Mähvorrichtungen 8 und 10 verkleinerten Durchmesser auf. Das Durchmesserverhältnis der inneren Einzugs- und Mähvorrichtungen 9, 11 zu den äußeren Einzugs- und Mähvorrichtungen 8, 10 kann im Bereich von 1 : 1,5 bis 1 : 2 liegen und beträgt bei dem dargestellten Beispiel etwa 1 : 1,75.

Auf diese Weise ist zwischen den beiden Querebenen der Maschine, die von den in Fahrtrichtung nachlaufenden Umfangspunkten der äußeren und der inneren Einzugs- und Mähvorrichtungen 8 und 10 einerseits sowie 9 und 11 andererseits definiert sind, ein Aufnahmeraum 55 gebildet, in dem die am Traggestell abgestützten Schrägfördertrommeln 36 und 37 untergebracht sind. Der Arbeitsteil der Maschine gemäß diesem Ausführungsbeispiel baut daher in axialer Richtung im Vergleich zu der Ausführungsform gemäß Fig. 1 kürzer. Hiermit einher gehen auch kürzere, geradlinige Förderwege für das geschnittene Erntegut im Bereich zwischen den äußeren Einzugs- und Mähvorrichtungen 8, 10 und den inneren Einzugs- und Mähvorrichtungen 9, 11, wie sie durch je einen geradlinigen Abstreifer 56, 57 im umfangsseitigen Berührungsbereich zwischen den inneren und den äußeren Einzugs- und Mähvorrichtungen 8, 9 bzw. 10 und 11 vorgegeben sind. Über den zwischen den Umfängen der Schrägfördertrommeln 36 und 37 belassenen mittleren Förderspalt wird das geschnittene Erntegut mittig den Einschubwalzen 6 zugefördert.

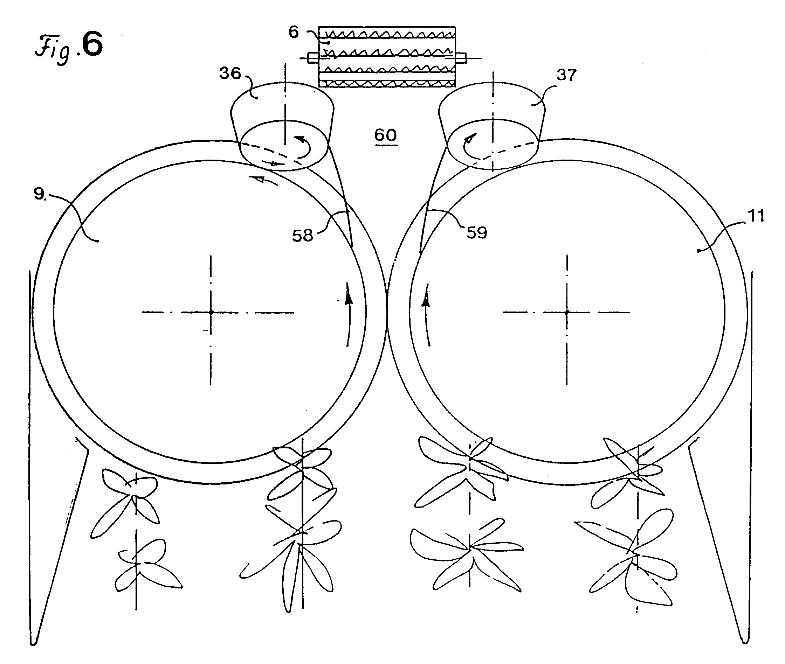

Die Fig. 6 veranschaulicht eine Ausführungsform der Maschine, bei der beidseits ihrer vertikalen Längsmittelebene nur jeweils eine Einzugs- und Mähvorrichtung 9 bzw. 11 angeordnet ist. Diese Maschine hat eine Arbeitsbreite von etwa 3 m. Die beiden Schrägfördertrommeln 36 und 37 sind bei dieser Ausführungsform, ähnlich wie im Falle der Ausgestaltung gemäß Fig. 5, den stirnseitigen Endbereichen der Einschubwalzen 6 des Häckselgebläses 1 zugeordnet, wobei sie dank ihres gegenüber den Einzugs- und Mähvorrichtungen 9, 11 beträchtlich verkleinerten Durchmessers nahe an den Zwickel zwischen den beiden Einzugs- und Mähvorrichtungen 9, 11 herangeführt sind und im Verein mit je einem Abstreifer 58, 59 einen mittleren Einschubkanal 60 für das geschnittene Erntegut begrenzen. Die Abstreifer 58 und 59 verlaufen leicht beogenförmig vom Umfang der Einzugs- und Mähvorrichtung 9 bzw. 11 zu der angrenzenden Schrägfördertrommel 36 bzw. 37.

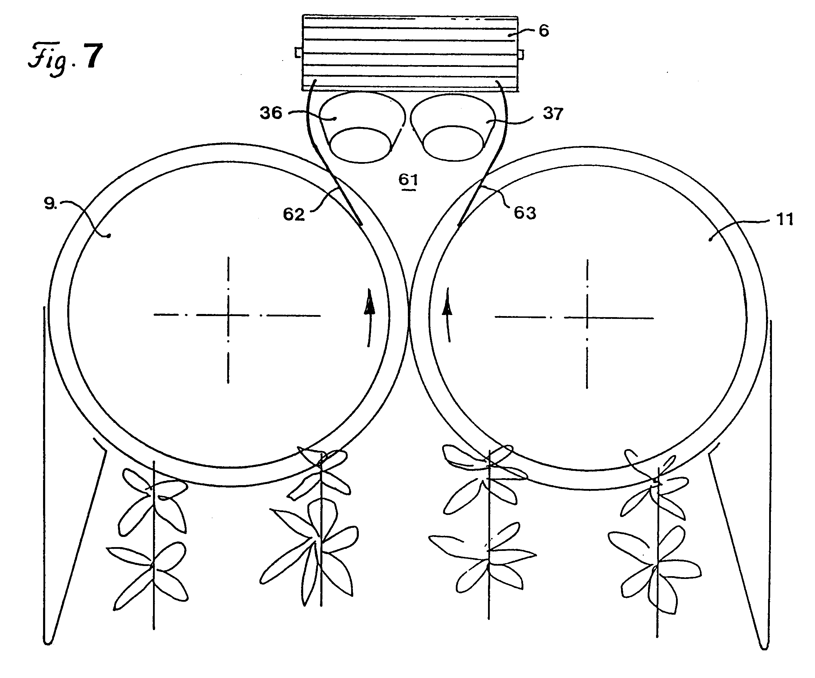

Eine Abwandlung einer Maschine mit nur zwei beidseits der vertikalen Längsmittelebene der Maschine angeordneten Einzugs- und Mähvorrichtungen 9, 11 veranschaulicht Fig. 7. Hiernach sind die beiden Schrägfördertrommeln 36, 37 in einem zwischen den beiden Einzugs- und Mähvorrichtungen 9, 11 und den Einschubwalzen 6 gebildeten Zwickelraum 61 angeordnet. Die beiden Schrägfördertrommeln 36 und 37 sind dabei den Einschubwalzen 6 umfangsseitig vorgelagert, während der Zwickelraum 61 außenseitig von zwei Abstreif- und Führungsblechen 62, 63 für das geschnittene Erntegut begrenzt ist. Die beiden Abstreif- und Führungsbleche 62, 63 verlaufen vom Umfang der jeweils angrenzenden Einzugs- und Mähvorrichtung 9 bzw. 11 unter bogenförmiger Einfassung der beiden Schrägfördertrommeln 36, 37 zu den stirnseitigen Endbereichen der Einschubwalzen 6 des Häckselgebläses 1 hin.

Das wie im Falle der Ausführungsform gemäß Fig. 6 mittig zwischen den Einzugs- und Mähvorrichtungen 9 und 11 hindurchgeförderte geschnittene Erntegut wird bei dieser Ausführungsform über die äußeren Förderspalte zwischen den Abstreif- und Führungsblechen 62, 63 und dem jeweils angrenzenden Umfang der Schrägfördertrommeln 36, 37 den Einschubwalzen 6 von deren beiden axialen Endbereichen her zugeführt. Auch bei diesem Ausführungsbeispiel ist eine kompakte, axial kurzbauende Ausbildung bei in ihrem Durchmesser gegenüber den Einzugs- und Mähvorrichtungen 9, 11 erheblich, zum Beispiel auf etwa 1/4, verkleinerten Schrägfördertrommeln 36, 37 erreicht.

Bei sämtlichen Ausführungsbeispielen werden die gleichen Bezugszeichen für gleiche bzw. übereinstimmende Bauteile, ohne diese erneut im einzelnen zu beschreiben, verwendet.

## Patentansprüche

1. Maschine zum Mähen und Häckseln von Mais und dgl. stengelartigem Erntegut, bei der innerhalb ihrer von zwei seitlichen Führungen begrenzten Gesamtarbeitsbreite zumindest zwei um vertikale oder zumindest im wesentlichen vertikale Achsen rotierende, mit abstehenden Mitnehmerzähnen versehene und eine im wesentlichen horizontale Arbeitsebene definierende Einzugs- und Mähvorrichtungen beidseits der vertikalen Längsmittelebene der Maschine einem Häckselgebläse vorgeordnet sind und jeweils eine Mehrzahl von über den vorderen Arbeitsbereich verteilten Einzugs- und Schnittstellen ausbilden, die jeweils durch im Bereich zwischen dem Kopf- und dem Grundkreis der Mitnehmerzähne verlaufende Führungsteile überbrückt sind, wobei dem Häckselgebläse zu seiner Beschickung mit dem geschnittenen Erntegut Einschubwalzen vorgeordnet sind, die einen in einer mit Abstand oberhalb der Arbeitsebene der Einzugs- und Mähvorrichtungen liegenden horizontalen Ebene verlaufenden Einführungsspalt für das Erntegut bilden, **dadurch gekennzeichnet,** daß im Bereich zwischen den beiden Einzugs- und Mähvorrichtungen (9,11) und den an diese angrenzenden, den Einführungsspalt (7) definierenden Einschubwalzen (6) jeweils eine den vertikalen Abstand zwischen der Arbeitsebene der Einzugs- und Mähvorrichtungen (9,11) und der Einführungsspaltebene überbrückende Schrägfördertrommel (36,37) beidseits der vertikalen Längsmittelebene der Maschine in einer Anordnung und Ausgestaltung zur Übernahme des Ernteguts von den Einzugs- und Mähvorrichtungen (9,11) und zu dessen Einspeisung in den Einführungsspalt (7) angeordnet ist.

2. Maschine nach Anspruch 1, dadurch gekennzeichnet, daß die beiden Schrägfördertrommeln (36,37) mit ihren Drehachsen (39) jeweils in einer zur vertikalen Längsmittelebene der Maschine parallelen Vertikalebene zur Arbeitsebene der Einzugs- und Mähvorrichtungen (8,9,10,11) geneigt sind.

3. Maschine nach Anspruch 2, dadurch gekennzeichnet, daß der Neigungswinkel der Drehachsen (39) der Schrägfördertrommeln (36,37) ein spitzer Winkel von etwa 15°-30°, vorzugsweise etwa 20°, ist.

4. Maschine nach einem der Ansprüche 1 bis 3, dadurch gekennzeichnet, daß die Schrägfördertrommel (36,37) an ihrem unteren und ihrem oberen Umfangsrand jeweils mit einem Kranz (40,42) von Mitnehmerzähnen (43) für das geschnittene Erntegut versehen sind.

5. Maschine nach Anspruch 4, dadurch gekennzeichnet, daß die Schrägfördertrommeln (36,37) im Bereich zwischen den unteren und den oberen Mitnehmerzahnkränzen (40,42) mit einem weiteren, mittleren Kranz (41) von Mitnehmerzähnen (43) versehen sind.

6. Maschine nach Anspruch 4 oder 5, dadurch gekennzeichnet, daß die Kopfkreisdurchmesser der Mitnehmerzahnkränze (40,41,42) der Schrägfördertrommeln (36,37) für ein eng beabstandetes Zusammenwirken mit entsprechenden Mitnehmerzahnkränzen (15,16,17) der angrenzenden Einzugs- und Mähvorrichtungen (9,11) bemessen sind.

7. Maschine nach Anspruch 6, dadurch gekennzeichnet, daß sich die Kopfkreisdurchmesser vom unteren Mitnehmerzahnkranz (15;40) der angrenzenden Einzugs- und Mähvorrichtungen (9,11) und/oder der Schrägfördertrommeln (36,37) zum jeweils oberen Mitnehmerzahnkranz (16;42) entsprechend dem Neigungswinkel der Schrägfördertrommeln (36,37) verkleinern.

8. Maschine nach einem der Ansprüche 1 bis 7, dadurch gekennzeichnet, daß den Einzugs- und Mähvorrichtungen (8,9,10,11) und den Schrägfördertrommeln (36,37) eine sich beidseits der vertikalen Längsmittelebene der Maschine in spiegelsymmetrischer Ausbildung erstreckende Führungsbank (31) für das geschnittene Erntegut auf seinem Förderweg zum Einführungsspalt (7) der Einschubwalzen (6) des Häckselgebläses (1) zugeordnet ist.

9. Maschine nach Anspruch 8, dadurch gekennzeichnet, daß die Führungsbank (31) mit ihrem zwischen die einander spiegelsymmetrisch gegenüberliegenden Schrägfördertrommeln (36,37) greifenden zentralen Endteil (50) ihrerseits oberflächig an den Einführungsspalt (7) der Einschubwalzen (6) angrenzt.

10. Maschine nach einem der Ansprüche 1 bis 9, mit vier paarweise beidseits der vertikalen Längsmittelebene der Maschine angeordneten Einzugs- und Mähvorrichtungen, wobei die inneren, an die vertikale Längsmittelebene der Maschine angrenzenden Einzugs- und Mähvorrichtungen zugleich auch jeweils ein Überführungsorgan für von den äußeren Einzugs- und Mähvorrichtungen zugeführtes geschnittenes Erntegut bilden, dadurch gekennzeichnet, daß die vier Einzugs- und Mähvorrichtungen (8,9,10,11) mit ihren in Fahrtrichtung vorauslaufenden Umfangspunkten in einer gemeinsamen vertikalen Querebene der Maschine angeordnet sind.

11. Maschine nach Anspruch 10, dadurch gekennzeichnet, daß die inneren Einzugs- und Mähvorrichtungen (9,11) einen gegenüber dem der äußeren Einzugs- und Mähvorrichtungen (8 ,10) verkleinerten Durchmesser aufweisen, derart, daß zwischen den von den in Fahrtrichtung nachlaufenden Umfangspunkten der äußeren und der inneren Einzugs- und Mähvorrichtungen (8,10;9,11) definierten Querebenen der Maschine ein Aufnahmeraum (55) gebildet ist, in dem die Schrägfördertrommeln (36,37) untergebracht sind.

12. Maschine nach Anspruch 11, dadurch gekennzeichnet, daß das Durchmesserverhältnis der inneren Einzugs- und Mähvorrichtungen (9,11) zu den äußeren Einzugs- und Mähvorrichtungen (8,10) im Bereich von 1 : 1,5 bis 1 : 2 liegt.

13. Maschine nach Anspruch 11 oder 12, dadurch gekennzeichnet, daß im umfangsseitigen Berührungsbereich zwischen den inneren und äußeren Einzugs- und Mähvorrichtungen (8,9,10,11) je ein geradliniger Abstreifer (56,57) angeordnet ist.

14. Maschine nach einem der Ansprüche 1 bis 9, mit zwei beidseits der vertikalen Längsmittelebene der Maschine angeordneten Einzugs- und Mähvorrichtungen, dadurch gekennzeichnet, daß die beiden Schrägfördertrommeln (36,37) den stirnseitigen Endbereichen der Einschubwalzen (6) des Häckselgebläses (1) zugeordnet sind und im Verein mit je einem von ihrem Umfang zum Umfang der angrenzenden Einzugs- und Mähvorrichtung (9,11) geführten Abstreifer (58,59) einen mittleren Einschubkanal (60) für das geschnittene Erntegut begrenzen.

15. Maschine nach einem der Ansprüche 1 bis 9, mit zwei beidseits der vertikalen Längsmittelebene der Maschine angeordneten Einzugs- und Mähvorrichtungen, dadurch gekennzeichnet, daß die beiden Schrägfördertrommeln (36,37) in einem zwischen den beiden Einzugs- und Mähvorrichtungen (9,11) und den Einschubwalzen (6) gebildeten Zwickelraum (61) angeordnet sind, der außenseitig von zwei Abstreif- und Führungsblechen (62,63) begrenzt ist.

16. Maschine nach Anspruch 15, dadurch gekennzeichnet, daß die beiden Abstreif- und Führungsbleche (62,63) vom Umfang der jeweils angrenzenden Einzugs- und Mähvorrichtung (9,11) unter bogenförmiger Einfassung der beiden Schrägfördertrommeln (36,37) zu den stirnseitigen Endbereichen der Einschubwalzen (6) des Häckselgebläses (1) hin verlaufen.

## Claims

1. A machine for mowing and chopping maize and like stalk-type crops, in which, within its total working width defired by two lateral guides, there are at least two draw-in and mowing devices rotatable about vertical or at least substantially vertical axes and which have projecting driving teeth and defining a substantially horizontal working plane, said devices being disposed on both sides of the vertical longitudinal central plane through the machine and upstream of a chaff blower and forming in each case a plurality of draw-in and cutting locations distributed over the forward working area and bridged by guide parts extending in the region between the head and root circle of the driving teeth, whereby there are upstream of the chaff blower and adapted to feed the cut crop material to it, push-in rollers which form for the harvested material a feed-in gap extending in a horizontal plane located at a distance above the working plane of the draw-in and mowing devices, characterised in that in the area between the two draw-in and mowing devices (9, 11) and the push-in rollers (6) defining the feed-in gap (7) and adjacent said devices (9, 11) there is in each case, bridging the vertical gap between the working plane of the draw-in and mowing devices (9, 11) and the plane of the feed-in gap, an inclined conveyor drum (36, 37) situated one on either side of the vertical longitudinal central plane through the machine in a disposition and design adapted to take over the harvested material from the draw-in and mowing devices (9, 11) and feed it into the feed-in gap (7).

2. A machine according to Claim 1, characterised in that the two inclined conveyor drums (36, 37) have their axes of rotation (39) in each case inclined in relation to the working plane of the draw-in and mowing devices (8, 9, 10, 11) in a vertical plane parallel with the vertical longitudinal central plane through the machine.

3. A machine according to Claim 2, characterised in that the angle of inclination of the axes of rotation (39) of the inclined conveyor drums (36, 37) is an acute angle of approximately 15° to 30° and preferably about 20°.

4. A machine according to one of Claims 1 to 3, characterised in that the inclined conveyor drums (36, 37) are, on their bottom and top peripheral edges provided in each case with a ring (40, 42) of driving teeth (43) for the cut harvested material.

5. A machine according to Claim 4, characterised in that the inclined conveyor drums (36, 37) are provided with a further central ring (41) of driving teeth (43) in the region between the lower and upper rings (40, 42) of driving teeth.

6. A machine according to Claim 4 or 5, characterised in that the outside circle diameters of the driving teeth rings (40, 41, 42) on the inclined conveyor drums (36, 37) are dimensioned for closely-spaced cooperation with corresponding driving teeth rings (15, 16, 17) on the adjacent draw-in and mowing devices (9, 11).

7. A machine according to Claim 6, characterised in that the outside circle diameters become smaller from the lower driving teeth ring (15, 40) of the adjacent draw-in and mowing devices (9, 11) and/or on the inclined conveyor drums (36, 37) in the direction of the respective upper driving teeth ring (16, 42) in accordance with the angle of inclination of the inclined conveyor drums (36, 37).

8. A machine according to one of Claims 1 to 7, characterised in that a guide bank (31) for cut harvested material and extending on both sides of the vertical longitudinal central plane of the machine in a mirror-symmetrical design is associated with the draw-in and mowing devices (8, 9, 10, 11) and the inclined conveyor drums (36, 37) to guide the chopped material on its way to the feed-in gap (7) between the push-in rollers (6) of the chaff blower (1).

9. A machine according to Claim 8, characterised in that the guide bank (31) has its central end part (50) disposed with its upper surface adjacent the feed-in gap (7) of the push-in rollers (6) and engages between the mirrored-symmetrically opposite inclined conveyor drums (36, 37).

10. A machine according to one of Claims 1 to 9, having four draw-in and mowing devices disposed in pairs on both sides of the vertical longitudinal central plane through the machine, whereby the inner draw-in and mowing devices which are adjacent the vertical longitudinal central plane through the machine serve at the same time as transfer means for chopped harvested material fed by the outer draw-in and mowing devices, characterised in that the four draw-in and mowing devices (8, 9, 10, 11) are disposed so that their peripheral points which are in front in the direction of travel are disposed in one common vertical transverse plane through the machine.

11. A machine according to Claim 10, characterised in that the inner draw-in and mowing devices (9, 11) have a diameter which is smaller than that of the outer draw-in and mowing devices (8, 10) so that between the transverse planes through the machine, defined by the peripheral points on the outer and inner draw-in and mowing devices (8, 10; 9, 11) which trail in the direction of travel there is a space (55) in which the inclined conveyor drums (36, 37) are accommodated.

12. A machine according to Claim 11, characterised in that the ratio of diameters of the inner draw-in and mowing devices (9, 11) to the outer draw-in and mowing devices (8, 10) lies in the range from 1:1.5 to 1:2.

13. A machine according to Claim 11 or 12, characterised in that in the area of peripheral contact between the inner and outer draw-in and mowing devices (8, 9, 10, 11) there is in each case a rectilinear scraper (56, 57).

14. A machine according to one of Claims 1 to 9, with two draw-in and mowing devices disposed on either side of the vertical longitudinal central plane through the machine, characterised in that the two inclined conveyor drums (36, 37) are associated with the end zones of the push-in rollers (6) of the chaff blower (1) and, in conjunction with respective scrapers (58, 59) guided from their periphery to that of the adjacent draw-in and mowing device (9, 11), form a central push-in channel (60) for the chopped harvested material.

15. A machine according to one of Claims 1 to 9, with two draw-in and mowing devices disposed one on each side of the vertical longitudinal plane through the machine, characterised in that the two inclined conveyor drums (36, 37) are disposed in a gusset space (61) formed between the two draw-in and mowing devices (9, 11) and the push-in rollers (6), said space (61) being bounded on the outside by two scraper and guide plates (62, 63).

16. A machine according to Claim 15, characterised in that the two scraper and guide plates (62, 63) extend from the periphery of the respectively adjacent draw-in and mowing device (9, 11) to the end zones of the push-in rollers (6) of the chaff blower (1) while passing arcuately around the two inclined conveyor drums (36, 37).

## Revendications

1. Machine pour faucher et hacher le maïs et les plantes à tige similaires, dans laquelle, à l'intérieur de sa largeur de travail totale limitée par deux guides latéraux, au moins deux dispositifs de coupe et d'amenée, tournant autour d'axes verticaux ou au moins sensiblement verticaux, pourvus de dents d'entraînement saillantes et définissant un plan de travail essentiellement horizontal, de part et d'autre du plan médian longitudinal vertical de la machine, sont placés devant un dispositif de hachage-soufflage et forment, respectivement, une pluralité de positions de coupe et d'amenée réparties sur la zone de travail avant, positions qui sont chaque fois pontées par des parties de guides s'étendant dans la zone comprise entre le cercle de tête et le cercle de base des dents d'entraînement, dans laquelle des rouleaux d'introduction sont placés devant le dispositif de hachage-soufflage en vue d'alimenter en plantes coupées, ces rouleaux formant une fente d'entrée pour les plantes coupées qui s'étend dans un plan horizontal situé à une certaine distance au-dessus du plan de travail des dispositifs de coupe et d'amenée, caractérisée en ce que, dans la zone comprise entre les deux dispositifs de coupe et d'amenée (9, 11) et les rouleaux d'introduction (6) qui leur sont adjacents et qui définissent la fente d'entrée (7), chaque fois un tambour de transport incliné (36, 37), pontant la distance verticale, entre le plan de travail des dispositifs de coupe et d'amenée (9, 11) et le plan de la fente d'entrée, est disposé d'un côté et de l'autre du plan médian longitudinal vertical de la machine, dans une disposition et un agencement permettant la reprise des plantes provenant des dispositifs de coupe et d'amenée (9, 11) et leur introduction dans la fente d'entrée (7).

2. Machine suivant la revendication 1, caractérisée en ce que les deux tambours de transport inclinés (36, 37) sont chacun inclinés par rapport au plan de travail des dispositifs de coupe et d'amenée (8, 9, 10, 11), leurs axes de rotation (39) étant situés dans un plan vertical parallèle au plan médian longitudinal vertical de la machine.

3. Machine suivant la revendication 2, caractérisée en ce que l'angle d'inclinaison des axes de rotation (39) des tambours de transport inclinés (36, 37) est un angle aigu d'environ 15° à 30°, de préférence, d'environ 20°.

4. Machine selon l'une quelconque des revendications 1 à 3, caractérisée en ce que les tambours de transport inclinés (36, 37) sont pourvus sur leurs bords périphériques supérieur et inférieur, respectivement, d'une couronne (40, 42), de dents d'entraînement (43) pour les plantes coupées.

5. Machine suivant la revendication 4, caractérisée en ce que les tambours de transport inclinés (36, 37), sont pourvus dans la zone comprise entre les couronnes de dents d'entraînement supérieure et inférieure (40, 42), d'une couronne médiane supplémentaire (41) de dents d'entraînement (43).

6. Machine suivant la revendication 4 ou 5, caractérisée en ce que les diamètres des cercles de tête des couronnes de dents d'entraînement (40, 41, 42) des tambours de transport inclinés (36, 37) sont dimensionnés en vue d'agir en combinaison étroite avec des couronnes de dents d'entraînement (15, 16, 17) correspondantes des dispositifs de coupe et d'amenée adjacents (9, 11).

7. Machine suivant la revendication 6, caractérisée en ce que le diamètre des cercles de tête vont en diminuant depuis celui de la couronne de dents d'entraînement inférieure (15; 40) des dispositifs de coupe et d'amenée adjacents (9, 11) et/ou des tambours de transport inclinés (36, 37) jusqu'à celui de la couronne de dents d'entraînement supérieure (16; 42) suivant l'angle d'inclinaison des tambours de transport inclinés (36, 37).

8. Machine suivant l'une quelconque des revendications 1 à 7, caractérisée en ce qu'un banc de guidage (31), s'étendant de part et d'autre du plan médian longitudinal vertical de la machine en une disposition énantiomorphe est adjoint aux dispositifs de coupe et d'amenée (8, 9, 10, 11) et aux tambours de transport inclinés (36, 37) pour les plantes coupées en vue de les acheminer à la fente d'entrée (7) des rouleaux d'introduction (6) du dispositif de hachage-soufflage (1).

9. Machine suivant la revendication 8, caractérisée en ce que le banc de guidage (31) est, pour sa part, adjacent superficiellement à la fente d'entrée (7) des rouleaux d'introduction (6) par sa partie d'extrémité centrale (50) s'engageant entre les tambours de transport inclinés (36, 37) qui sont opposés l'un par rapport à l'autre de manière énantiomorphe.

10. Machine suivant l'une quelconque des revendications 1 à 9, comportant quatre dispositifs de coupe et d'amenée disposés par paires de part et d'autre du plan médian longitudinal vertical de la machine, les dispositifs de coupe et d'amenée intérieurs adjacents au plan médian longitudinal vertical de la machine, formant chacun, en même temps, un organe de transfert pour les plantes coupées provenant des dispositifs de coupe et d'amenée extérieurs, caractérisée en ce que les quatre dispositifs de coupe et d'amenée (8, 9, 10, 11) sont disposés par leurs points périphériques avant dans le sens de la marche, dans un plan transversal vertical commun de la machine.

11. Machine suivant la revendication 10, caractérisée en ce que les dispositifs de coupe et d'amenée intérieurs (9, 11) présentent un diamètre réduit par rapport à celui des dispositifs de coupe et d'amenée extérieurs (8, 10), de sorte qu'un espace de réception (55) est ménagé entre les plans transversaux de la machine définis par les points périphériques arrière dans la sens de la marche des dispositifs de coupe et d'amenée intérieurs et extérieurs (8, 10; 9, 11), espace dans lequel sont logés les tambours de transport inclinés (36, 37).

12. Machine suivant la revendication 11, caractérisée en ce que le rapport des diamètres des dispositifs de coupe et d'amenée intérieurs (9, 11) et des dispositifs de coupe et d'amenée extérieurs (8, 10) est compris entre 1:1,5 et 1:2.

13. Machine suivant la revendication 11 ou 12, caractérisée en ce qu'un racloir rectiligne (56, 57) est disposé chaque fois dans la zone de contact circonférentielle entre les dispositifs de coupe et d'amenée intérieurs et extérieurs (8, 9, 10, 11).

14. Machine suivant l'une quelconque des revendications 1 à 9, comportant deux dispositifs de coupe et d'amenée disposés de part et d'autre du plan médian longitudinal vertical de la machine, caractérisée en ce que les deux tambours de transport inclinés (36, 37) sont adjoints aux zones d'extrémité d'about des rouleaux d'introduction (6) du dispositif de hachage-soufflage (1) et délimitent un canal d'introduction médian (60) pour les plantes coupées, conjointement avec chaque fois un racloir (58, 59) guidé depuis leur périphérie jusqu'à la périphérie des dispositifs de coupe et d'amenée (9, 11).

15. Machine suivant l'une quelconque des revendications 1 à 9, comportant deux dispositifs de coupe et d'amenée disposés de part et d'autre du plan médian longitudinal vertical de la machine, caractérisée en ce que les deux tambours de transport inclinés (36, 37) sont disposés, dans un espace d'enfourchure (61) formé entre les deux dispositifs de coupe et d'amenée (9, 11), et les rouleaux d'introduction (6), espace qui est limité à ses côtés extérieurs par deux tôles de guidage et de raclage (62, 63).

16. Machine suivant la revendication 15, caractérisée en ce que les deux tôles de guidage et de raclage (62, 63) s'étendent chacune depuis la périphérie du dispositif de coupe et d'amenée (9, 11) respectivement adjacent, jusqu'aux zones d'extrémité d'about des rouleaux d'introduction (6) du dispositif de hachage-soufflage (1) tout en confinant dans leurs parties arquées les deux tambours de transport inclinés (36, 37).
